# EUROPÄISCHE PATENTSCHRIFT

(11) **EP 1 828 858 B1**
(45) Veröffentlichungstag und Bekanntmachung des Hinweises auf die Patenterteilung: **13.02.2019**
(21) Anmeldenummer: 05823020.2
(22) Anmeldetag: 21.12.2005
(51) Int. Cl.: G05B 19/042, G05B 19/418

(54) **STEUERUNGSSYSTEM MIT EINER VIELZAHL VON RÄUMLICH VERTEILTEN STATIONEN SOWIE VERFAHREN ZUM ÜBERTRAGEN VON DATEN IN EINEM SOLCHEN STEUERUNGSSYSTEM**
CONTROL SYSTEM WITH A PLURALITY OF SPATIALLY DISTRIBUTED STATIONS AND METHOD FOR TRANSMITTING DATA IN SAID CONTROL SYSTEM
SYSTEME DE COMMANDE COMPORTANT UNE PLURALITE DE STATIONS SPATIALEMENT DISTRIBUEES ET PROCEDE DE TRANSMISSION DE DONNEES DANS UN TEL SYSTEME DE COMMANDE

(30) Priorität: 24.12.2004 DE 102004063213; 27.12.2004 DE 102004063584
(43) Veröffentlichungstag der Anmeldung: 05.09.2007
(73) Patentinhaber: Pilz GmbH & Co. KG, 73760 Ostfildern (DE)
(72) Erfinder: SCHWENKEL, Hans, 70192 Stuttgart (DE); WOHNHAAS, Klaus, 70736 Fellbach (DE); SPERRER, Reinhard, 73760 Ostfildern (DE); HOLZAEPFEL, Matthias, 70329 Stuttgart (DE); RUPP, Roland, 73110 Hattenhofen (DE)
(74) Vertreter: Witte, Weller & Partner Patentanwälte mbB
(86) Internationale Anmeldenummer: PCT/EP2005/013764
(87) Internationale Veröffentlichungsnummer: WO 2006/069691

(56) Entgegenhaltungen:
- EP-A- 1 075 110
- WO-A-03/054644
- WO-A-2004/071025
- DE-A1- 19 851 245
- DE-C1- 19 934 514

## Beschreibung

Die vorliegende Erfindung betrifft ein Verfahren zum Übertragen von Daten in einem Steuerungssystem mit einer Vielzahl von räumlich verteilten Stationen, die über ein Kommunikationsmedium miteinander verbunden sind, wobei die Stationen logisch in einer Reihe angeordnet sind, die eine erste Station, zumindest eine zweite Station und eine letzte Station definiert, mit den Schritten:
- die erste Station erzeugt einen Datenrahmen mit einer Vielzahl von Datenfeldern, wobei jeder zweiten Station und der letzten Station zumindest ein Datenfeld zum Belegen mit Sendedaten eindeutig zugewiesen ist,
- die erste Station sendet den Datenrahmen als hinlaufenden Datenrahmen an diejenige zweite Station, die der ersten Station in der Reihe nachfolgt,
- jede zweite Station empfängt den hinlaufenden Datenrahmen von der jeweils vorhergehenden Station in der Reihe, belegt ein ihr zugewiesenes Datenfeld mit Sendedaten und sendet den hinlaufenden Datenrahmen mit den Sendedaten an die in der Reihe nachfolgende Station, und
- die letzte Station empfängt den hinlaufenden Datenrahmen von der vorhergehenden Station in der Reihe, belegt ein ihr zugewiesenes Datenfeld mit letzten Sendedaten und sendet den Datenrahmen mit allen Sendedaten als zurücklaufenden Datenrahmen an die Reihe der Stationen zurück.

Die Erfindung betrifft ferner ein Steuerungssystem zum automatisierten Steuern von Anlagen oder Geräten, mit einer Vielzahl von räumlich verteilten Stationen, die über ein Kommunikationsmedium miteinander verbunden sind, wobei die Stationen logisch in einer Reihe angeordnet sind, die eine erste Station, zumindest eine zweite Station und eine letzte Station definiert, und wobei die Stationen dazu ausgebildet sind, ein Verfahren der zuvor beschriebenen Art auszuführen.

Ein Steuerungssystem und ein Verfahren der vorgenannten Art sind aus DE 199 34 514 C1 bekannt.

Die DE 199 34 514 C1 beschreibt ein Verfahren zum Konfigurieren einer Station (dort als Busteilnehmer bezeichnet), die an einen Feldbus angeschlossen wird. Insbesondere geht es dabei um die fehlersichere Zuweisung einer logischen Adresse an eine Station, die über den so genannten Interbus mit anderen Busteilnehmern/Stationen verbunden ist. Der Interbus ist ein bekanntes und spezifiziertes Feldbussystem, das vor allem in der industriellen Automatisierung von Anlagen und Geräten eingesetzt wird. Weitere bekannte Feldbussysteme sind der so genannte CAN-Bus und der so genannte Profibus.

Aus WO 03/054644 A1 ist ein Verfahren bekannt, bei dem in einem seriellen Bussystem, typischerweise ein Feldbus, Daten in Form von Telegrammen, die Prozessbilder von Steuerungsaufgaben des aktiven Busteilnehmers darstellen, an die angeschlossenen aktiven Busteilnehmer übertragen werden. Das Verfahren beschreibt dabei im Wesentlichen eine Kommunikation zwischen einer zentralen Steuereinheit (dort als Master bezeichnet) und abgesetzten E/A-Einheiten (dort als Slave bezeichnet).

Die bekannten Feldbussysteme dienen dazu, eine Vielzahl von räumlich verteilten Stationen/Busteilnehmern so miteinander zu verbinden, dass diese Informationen austauschen können. Dabei sind Feldbussysteme vor allem auf die Kommunikationsanforderungen zugeschnitten, die sich aus dem Einsatzzweck als Kommunikationsmedium in Steuerungssystemen zum automatisierten Steuern von Anlagen und Geräten ergeben. Neben einer möglichst einfachen und robusten Verkabelung gehört hierzu vor allem ein determiniertes Zeitverhalten bei der Übertragung der Daten sowie die Fähigkeit, relativ geringe Datenmengen von einer großen Anzahl von Stationen zu transportieren. Typischerweise sind an einen Feldbus eine oder wenige (intelligente) Steuerungseinheiten angeschlossen sowie eine große Anzahl abgesetzter E/A-Einheiten, die Zustandssignale der Anlage oder des Gerätes über Sensoren aufnehmen und an die Steuerungseinheit(en) melden, und/oder Steuerdaten von der übergeordneten Steuerungseinheit empfangen und in Abhängigkeit davon geeignete Aktoren betätigen. Beispielsweise kann eine E/A-Einheit die Signale von Positionsschaltern, Lichtschranken, Drehgebern u.a. aufnehmen und über den Feldbus an die übergeordnete Steuerungseinheit übertragen. Die Steuerungseinheit, häufig eine speicherprogrammierbare Steuerung (SPS), bestimmt in Abhängigkeit von diesen Prozessgrößen Steuerdaten für Aktoren, wie z.B. Magnetventile, Schütze, Antriebe u.a. Die E/A-Einheiten empfangen die Steuerdaten von der übergeordneten Steuerung über den Feldbus und betätigen die Aktoren.

Der eingangs genannte Interbus arbeitet wie ein großes Schieberegister, dessen einzelne Speicherstellen in den angeschlossenen Stationen liegen. Ein so genannter Busmaster, der häufig räumlich in der übergeordneten Steuerungseinheit angeordnet ist, erzeugt einen Datenrahmen mit einer Anzahl von Datenfeldern, die der Anzahl der Speicherstellen in dem "Schieberegister" entspricht. Dieser Datenrahmen wird von dem Busmaster an die in Reihe angeschlossenen Stationen gesendet und dabei Datenfeld für Datenfeld von einer Station zur nächsten weitergereicht. Von der letzten Station der Reihe wird der Datenrahmen an den Busmaster zurückgesendet, so dass sich letztlich eine Ringstruktur ergibt. Wenn ein vom Busmaster generiertes Startwort nach dem Durchlaufen der Ringstruktur wieder beim Busmaster ankommt und in einer anschließenden Prüfsummenauswertung keine Übertragungsfehler erkannt werden, signalisiert der Busmaster allen angeschlossenen Stationen über ein Steuersignal, dass sie die Daten, die dann in ihren jeweiligen Schieberegistern liegen, zur weiteren Verarbeitung übernehmen sollen. Umgekehrt "leeren" die einzelnen Stationen ihre mit Sendedaten belegten internen Schieberegister, indem sie die dort gespeicherten Daten an die nächstfolgende Station im Ring übertragen, wenn der Busmaster einen neuen Datenumlauf initiiert. Charakteristisch für den Interbus ist somit, dass die Anzahl der Datenfelder des umlaufenden Datenrahmens gleich der Anzahl der Speicherstellen in den angeschlossenen Stationen ist. Des Weiteren findet eine Kommunikation eigentlich nur zwischen jeder einzelnen Station und dem Busmaster statt. Ein Querverkehr zwischen zwei Stationen, die keine Busmasterfunktionalität besitzen, ist nur von einem Übertragungszyklus zum nächsten möglich, indem die sendende Station ihre Daten zunächst an den Busmaster überträgt und dieser die Daten anschließend in einem zweiten Datenzyklus an die Empfangsstation weiterleitet. Ein Vorteil des Interbus-Konzepts ist das deterministische Zeitverhalten, d.h. die zum Übertragen einer Information benötigte Zeit lässt sich weitgehend exakt vorhersagen. Außerdem können keine Kollisionen zwischen konkurrierenden Nachrichten auftreten.

Im Gegensatz dazu sind Kollisionen bei so genannten nachrichtenorientierten Feldbussystemen, wie etwa dem CAN-Bus, grundsätzlich möglich, da die einzelnen Stationen von sich aus Datentelegramme erzeugen und absenden können. Beim CAN-Bus werden derartige Kollisionen dadurch aufgelöst, dass die Stationen unterschiedliche Prioritäten besitzen, wobei sich eine Station mit einer höheren Priorität im Fall einer Kollision durchsetzt. Für die Station mit niedrigerer Priorität bedeutet dies allerdings, dass sie zumindest zeitweilig an dem Absenden einer Nachricht gehindert ist. Um ein deterministisches Zeitverhalten zu realisieren, ist es daher erforderlich, die maximale Auslastung des Feldbusses zu begrenzen, da mit zunehmender Auslastung des Busses die Wahrscheinlichkeit von Kollisionen steigt. Andererseits bieten CAN-Bus-basierte Steuerungssysteme eine höhere Flexibilität, da grundsätzlich ein Querverkehr ohne Zwischenschaltung eines Busmasters möglich ist. Dadurch können vor allem sicherheitsrelevante Daten, wie zum Beispiel ein Not-Aus-Befehl, schneller übertragen werden, und zwar ggf. auch als Broadcast-Telegramm.

Außerhalb der speziellen Feldbustechnologie haben Kommunikationsnetzwerke auf Basis des so genannten Ethernet-Standards durch das Internet und die Vernetzung von Personalcomputern eine große Verbreitung gefunden. In Ethernet-Netzwerken besitzt jeder Teilnehmer (jede Station) eine individuelle Adresse, die so genannte MAC-Adresse. Grundsätzlich kann jede Station jederzeit eine Nachricht absenden. Jede sendende Station überwacht die Verbindungsleitung daraufhin, ob die gesendete Nachricht auch unverfälscht lesbar ist, was bei einer Kollision mit einer gleichzeitig sendenden Station nicht der Fall wäre. Im Fall einer Kollision sendet jede Station ihre Sendedaten nach Ablauf einer zufällig ausgewählten Zeitspanne erneut. Ethernet-Netzwerke besitzen aufgrund der großen Verbreitung den Vorteil, dass die entsprechenden Hardwarekomponenten sehr kostengünstig sind. Sie bieten jedoch kein deterministisches Zeitverhalten und sind darüber hinaus eher für die azyklische Übertragung von größeren Datenmengen von wenigen angeschlossenen Stationen optimiert. Demgegenüber benötigen Steuerungssystem vor allem eine zyklische Datenübertragung. Aufgrund der kostengünstigen Hardwarekomponenten gibt es jedoch seit einigen Jahren das Bestreben, Ethernet-Technologien auch für die Kommunikation zwischen den Stationen eines Steuerungssystems zum Steuern einer technischen Anlage oder eines technischen Gerätes einzusetzen. Grundlagen und Anbieter von entsprechenden Komponenten sind beispielsweise in der DE-Zeitschrift "Industrial Ethernet" beschrieben, die unter der ISBN 3-8259-1925-0 von der Vogel-Industrie Medien GmbH und Co. KG in 97064 Würzburg erhältlich ist.

Die bislang vorgeschlagenen Ansätze für die Nutzung von Ethernet-Komponenten in automatisierten Steuerungssystemen sind jedoch nicht optimal. Schwierigkeiten bereitet insbesondere die Übertragung von sicherheitsrelevanten Steuerdaten, wie z.B. die Übertragung eines Not-Aus-Signals, sowie die Übertragung eines von der Steuerungseinheit daraufhin erzeugten Abschaltbefehls für einen Antrieb. Auch eine Datenübertragung mit kurzen Zykluszeiten, die beispielsweise für eine Antriebsregelung benötigt wird, ist schwierig auf Basis von Ethernet-Komponenten zu realisieren.

Vor diesem Hintergrund ist es eine Aufgabe der vorliegenden Erfindung, ein Verfahren der eingangs genannten Art anzugeben, mit dem sich Daten in einem Steuerungssystem zum automatisierten Steuern einer Anlage oder eines Gerätes unter hohen Echtzeitanforderungen übertragen lassen. Es ist weiterhin eine Aufgabe der Erfindung, ein Steuerungssystem der eingangs genannten Art anzugeben, bei dem für die Übertragung von Steuerund Prozessdaten kommerzielle Komponenten, insbesondere Ethernet-Komponenten, eingesetzt werden können, wobei das System trotzdem die Übertragung von sicherheitsrelevanten Steuer- und Prozessdaten ermöglichen soll.

Diese Aufgabe wird gemäß einem Aspekt der vorliegenden Erfindung durch ein Verfahren gemäß Anspruch 1 gelöst, bei dem die Stationen fremde Prozess- und/oder Steuerdaten aus den Datenfeldern des zurücklaufenden Datenrahmens lesen.

Gemäß einem weiteren Aspekt der Erfindung wird ein entsprechendes Steuerungssystem gemäß Anspruch 15 vorgeschlagen.

Die Stationen des Steuerungssystem beinhalten dabei zumindest eine Steuerungseinheit, die dazu ausgebildet ist, Prozessdaten zyklisch zu verarbeiten und in Abhängigkeit davon Steuerdaten zu erzeugen, sowie eine Vielzahl von E/A-Baugruppen, die dazu ausgebildet sind, Prozessdaten an die Steuerungseinheit zu senden und Steuerdaten von der Steuerungseinheit zu empfangen. Grundsätzlich kann das neue Verfahren jedoch auch bei anderen Steuerungssystemen und/oder Kommunikationsnetzwerken eingesetzt werden.

Die vorliegende Erfindung basiert damit auf einem Konzept, wie es grundsätzlich vom Interbus her bekannt ist, nämlich der Erzeugung und Übertragung eines Datenrahmens mit einer Vielzahl von Datenfeldern, wobei der Datenrahmen in einer Reihe von Stationen von einer Station zur nächsten weitergegeben wird. Die Erfindung unterscheidet sich jedoch von dem bekannten Interbus, weil die einzelnen Stationen fremde Sendedaten direkt aus dem zurücklaufenden Datenrahmen lesen, während das Lesen von Daten beim Interbus grundsätzlich nur aus dem hinlaufenden Datenrahmen erfolgt. Bevorzugt lesen die einzelnen Stationen fremde Sendedaten ausschließlich aus dem zurücklaufenden Datenrahmen, und sie legen eigene Sendedaten ausschließlich in die Datenfelder des hinlaufenden Datenrahmens. Abweichend hiervon ist es in einer allgemeineren Ausgestaltung der Erfindung jedoch auch möglich, Ausnahmen von diesem generellen Prinzip zuzulassen.

In der praktischen Implementierung unterscheidet sich die vorliegende Erfindung grundlegend von dem Interbus, der spezifikationsgemäß als großes "Schieberegister" ausgebildet ist. Im Gegensatz dazu ist die vorliegende Erfindung unabhängig von der physikalischen Realisierung des Kommunikationsmediums. In einer besonders bevorzugten Ausgestaltung, auf die weiter unten noch eingegangen wird, ist das Kommunikationsmedium eine Ethernet-kompatible Übertragungsstrecke, und der Datenrahmen ist ein Ethernet-kompatibler Datenrahmen, d.h. ein Datenrahmen, dessen grundsätzlicher Aufbau sich in die Ethernet-Spezifikationen einpasst.

Während der bekannte Interbus für die Übertragung der Daten eine Ringstruktur implementiert, bei der die letzte Station den Datenrahmen logisch direkt an die erste Station zurücksendet, realisiert die vorliegende Erfindung eine Doppellinie, bei der sowohl der hinlaufende als auch der zurücklaufende Datenrahmen sämtliche Stationen logisch durchläuft. Erst dadurch ist es möglich, dass die einzelnen Stationen eigene Sendedaten in die Datenfelder des hinlaufenden Datenrahmens ablegen und fremde Sendedaten aus dem zurücklaufenden Datenrahmen auslesen. Aufgrund dieser Eigenschaft erhält jede Station den umlaufenden Datenrahmen innerhalb eines Übertragungszyklus zweimal. Dadurch ist es möglich, dass ein beliebiger Querverkehr zwischen zwei oder mehr beliebigen Stationen innerhalb eines Übertragungszyklus abgeschlossen werden kann. Die vorliegende Erfindung ermöglicht daher eine Datenkommunikation, die hohen Echtzeitanforderungen genügt.

Darüber hinaus ermöglicht die vorliegende Erfindung eine äußerst flexible Kommunikation zwischen beliebigen Stationen. Damit besitzt die vorliegende Erfindung die Vorteile der nachrichtenorientierten Übertragungsverfahren, wie beispielsweise einer CAN-Bus- oder Ethernet-Verbindung.

Mit Hilfe des umlaufenden Datenrahmens und der erfindungsgemäßen Möglichkeit einer direkten Querkommunikation ermöglicht die vorliegende Erfindung eine sehr schnelle und deterministische Kommunikation. Damit ist sie gut geeignet, um auch sicherheitsrelevante Steuerdaten in einer nachfolgend noch näher beschriebenen Weise zu übertragen.

Die oben genannten Aufgaben sind daher vollständig gelöst.

In einer bevorzugten Ausgestaltung der Erfindung erzeugt die erste Stationen den hinlaufenden Datenrahmen in festgelegten Zeitabständen zyklisch und sendet ihn an die nachfolgende zweite Station.

In einem bevorzugten Ausführungsbeispiel ist die Zykluszeit, also die Zeit zwischen dem Absenden zweier aufeinanderfolgender, jedoch voneinander unabhängiger Datenrahmen, einstellbar. In einem bevorzugten Ausführungsbeispiel kann die Zykluszeit zwischen etwa 60 *µ*s und etwa 6 ms in verschiedenen Zwischenschritten eingestellt werden.

Diese Ausgestaltung ist besonders gut für ein Steuerungssystem zum automatisierten Steuern von technischen Anlagen oder Geräten geeignet, da Informationen in einem solchen Steuerungssystem üblicherweise zyklisch anfallen. Insbesondere bei kurzen Zykluszeiten, von beispielsweise 62,5 *µ*s, ermöglicht diese Ausgestaltung, die zur Regelung eines Antriebs bei einer Maschine erforderlichen Prozess- und Steuerdaten mit Hilfe des neuen Verfahrens zu übertragen. Mit anderen Worten kann das Steuerungssystem dieser Ausgestaltung in den Regelkreis der Antriebssteuerung einer Maschine integriert werden, was eine besonders kostengünstige und flexible Automatisierung einer Anlage oder eines Gerätes ermöglicht.

In einer weiteren Ausgestaltung beinhaltet der Datenrahmen zumindest eine erste und eine zweite Gruppe von Datenfeldern, wobei die Datenfelder der ersten Gruppe den einzelnen Stationen über alle Datenrahmen hinweg fest zugewiesen werden, und wobei die Datenfelder der zweiten Gruppe den Stationen auf individuelle Anforderung für jeweils einen Datenrahmen zugewiesen werden.

Diese Ausgestaltung erhöht die Flexibilität bei der Kommunikation und ermöglicht eine Optimierung des Steuerungssystems in Bezug auf Datendurchsatz und Übertragungsgeschwindigkeit. Die erste Gruppe von Datenfeldern kann zum Übertragen von Daten verwendet werden, ohne dass diese um Adressinformationen ergänzt werden müssen. Durch die feste Zuordnung der einzelnen Datenfelder ist nämlich eine Adressstruktur fest vorgegeben. Andererseits ermöglicht es die zweite Gruppe von Datenfeldern, einzelnen Stationen auf Anforderung zusätzliche Übertragungskapazität einzuräumen. Die zweite Gruppe von Datenfeldern ist besonders vorteilhaft zum Übertragen von azyklischen Daten, wie beispielsweise Diagnosedaten. Darüber hinaus können die Datenfelder der zweiten Gruppe auch sehr vorteilhaft dazu verwendet werden, systemfremde Daten über das vorhandene Kommunikationsmedium zu übertragen, beispielsweise Druckerdaten, die von einem PC an einen an das Kommunikationsnetzwerk angeschlossenen Drucker gesendet werden. In einem besonders bevorzugten Ausführungsbeispiel erfolgt die Vergabe der Datenfelder der zweiten Gruppe unter Verwendung eines Belegt-Flags, das bei jedem neuen Datenrahmen auf den Zustand "Datenfeld(er) frei" zurückgesetzt wird. Eine Station, die ein Datenfeld der zweiten Gruppe belegen möchte, muss dann nur das Belegt-Flag prüfen und ggf. auf "Belegt" setzen. Die azyklische Kommunikation wird vorzugsweise unter Verwendung von an sich bekannten Adressierungsverfahren abgewickelt, wobei die Adressen dann ebenfalls in den Datenfeldern der zweiten Gruppe übertragen werden.

In einer weiteren Ausgestaltung durchläuft der zurücklaufende Datenrahmen die Reihe der Stationen in umgekehrter Reihenfolge wie der hinlaufende Datenrahmen.

Alternativ hierzu wäre es grundsätzlich auch möglich, den zurücklaufenden Datenrahmen in einer anderen Reihenfolge zu führen. Darüber hinaus wäre es grundsätzlich auch möglich, den zurücklaufenden Datenrahmen an mehrere oder alle angeschlossen Stationen gleichzeitig zu versenden, was beispielsweise bei einer Funkstrecke als Übertragungsmedium ohne weiteres möglich ist. Die vorliegende Ausgestaltung besitzt demgegenüber den Vorteil, dass der Verwaltungsaufwand zur Gewährleistung einer fehlerfreien Kommunikation vereinfacht ist. Insbesondere kann die erste Station in der bevorzugten Ausgestaltung sehr leicht überwachen, ob der zurücklaufende Datenrahmen alle angeschlossenen Stationen erreicht hat. Dies ist insbesondere für die Übertragung von sicherheitsrelevanten Daten, wie beispielsweise Not-Aus-Steuerbefehlen, von großer Bedeutung.

In einer weiteren Ausgestaltung überwacht die erste Station, ob der zurücklaufende Datenrahmen innerhalb einer definierten Zeitspanne eintrifft.

Die Überwachung des zurücklaufenden Datenrahmens in der ersten Station ist besonders vorteilhaft für die Übertragung von sicherheitsrelevanten Daten, da sich hierdurch ein Ausfall der Kommunikationsverbindung sehr schnell feststellen lässt. Abhängig von den Echtzeitanforderungen kann die erste Station dann entweder einen Wiederholrahmen initiieren oder eine Fehlerbehandlungsroutine starten.

In einer besonders bevorzugten Ausgestaltung ist das Kommunikationsmedium eine Ethernet-kompatible Übertragungsstrecke, und der Datenrahmen ist ein Ethernet-kompatibler Datenrahmen.

Diese Ausgestaltung ermöglicht es, zumindest teilweise auf kommerziell erhältliche und damit sehr kostengünstige Hardwarekomponenten zurückzugreifen. Darüber hinaus ist es in dieser Ausgestaltung sehr leicht möglich, die an sich für Steuerungsaufgaben verwendete Datenübertragungsstrecke auch für andere Zwecke zu nutzen, beispielsweise TCP/IP-kompatible Datenpakete zu übertragen. Infolge dessen lassen sich erhebliche Kosten bei der Vernetzung von Komponenten in einer Werkhalle oder dergleichen einsparen. Charakteristisch an dieser Ausgestaltung ist unter anderem, dass jede Station über eine eigene MAC-Adresse verfügt, was grundsätzlich eine wahlfreie Kommunikation zwischen verschiedenen Stationen ermöglichen würde. Im Zusammenhang mit der vorliegenden Erfindung versendet jede Station jedoch zumindest den hinlaufenden Datenrahmen (und bevorzugt auch den zurücklaufenden Datenrahmen) an jeweils nur genau eine exakt definierte andere Station.

In einer weiteren Ausgestaltung versendet jede Station den hinlaufenden Datenrahmen im so genannten cut-through-Verfahren an die nachfolgende Station der Reihe.

Das cut-through-Verfahren ist für Ethernet-kompatible Übertragungsstrecken spezifiziert und beinhaltet, dass eine Station einen eingehenden Datenrahmen bereits analysiert und weiterleitet, bevor er von der betroffenen Station vollständig empfangen wurde. Durch diese Ausgestaltung wird die Verzögerungszeit zwischen dem Empfangen und Weiterleiten des hinlaufenden Datenrahmens reduziert. Dadurch lässt sich die Zykluszeit des Systems sehr einfach minimieren.

In einer weiteren Ausgestaltung sendet jede Station den hinlaufenden Datenrahmen an genau eine nachfolgende Station.

Abweichend hiervon wäre es insbesondere bei der Verwendung von Ethernet-Komponenten grundsätzlich auch möglich, Verzweigungen zu realisieren. Durch die bevorzugte Ausgestaltung wird jedoch die Bildung von Schleifen verhindert. Außerdem werden Kollisionen auf der Übertragungsstrecke ausgeschlossen, wodurch ein deterministisches Zeitverhalten mit sehr kurzen Zykluszeiten realisierbar ist.

In einer weiteren Ausgestaltung erzeugt die erste Station mehrere Datenrahmen und versendet diese in unmittelbarer zeitlicher Abfolge als hinlaufenden Datenrahmen an die nachfolgende zweite Station.

In dieser Ausgestaltung, die auch für sich genommen eine erfinderische Weiterentwicklung gegenüber bekannten Verfahren zum Übertragen von Daten in einem Steuerungssystem ist, erzeugt und versendet die erste Station mehrere Datenrahmen innerhalb eines Übertragungszyklus. Mit anderen Worten werden innerhalb der Zykluszeit ein erster hinlaufender Datenrahmen sowie unmittelbar folgende weitere Datenrahmen (Folgerahmen) versendet. Diese Ausgestaltung ist besonders vorteilhaft, wenn die zyklisch zu übertragende Datenmenge sehr groß ist und andererseits die Länge eines einzelnen Datenrahmens einen bestimmten Maximalwert nicht überschreiten soll. Die vorliegende Ausgestaltung ist daher besonders vorteilhaft, wenn viele zyklische Daten übertragen werden sollen, die verwendeten Datenrahmen jedoch die in der Ethernet-Spezifikation definierten Längen von etwa 1500 Byte nicht überschreiten sollen.

In einer weiteren Ausgestaltung werden einzelne Datenfelder eines Datenrahmens wechselweise von zumindest zwei Stationen mit Sendedaten belegt.

Diese Ausgestaltung, die auch für sich genommen eine erfinderische Weiterentwicklung gegenüber bekannten Verfahren zum Übertragen von Daten in einem Steuerungssystem ist, realisiert einen Multiplexbetrieb, in dem einzelne Datenfelder von einem Zyklus zum nächsten von unterschiedlichen Stationen belegt werden. Dabei sind die jeweiligen Datenfelder jedoch den beteiligten Stationen weiterhin eindeutig zugewiesen. Der Multiplexbetrieb ist besonders vorteilhaft, wenn innerhalb eines Steuerungssystems zyklische Daten mit unterschiedlichen Wiederholgeschwindigkeiten vorliegen. In diesem Fall können sich langsamere Stationen einzelne Datenfelder im Multiplexbetrieb teilen, so dass die insgesamt zur Verfügung stehende Übertragungskapazität optimal ausgenutzt wird.

In einer weiteren Ausgestaltung belegen einzelne Stationen zumindest ein Datenfeld des Datenrahmens mit Sendedaten, die zu einem Feldbustelegramm kompatibel sind. Besonders bevorzugt ist es, wenn die genannten Sendedaten kompatibel sind zu Telegrammen des CAN-Bus, Profibus und/oder Devicenet.

In dieser Ausgestaltung werden die genannten Feldbus-Telegramme mit dem neuen Verfahren "getunnelt" übertragen. Diese Ausgestaltung ermöglicht es, bestehende Feldbusnetze und deren Komponenten sehr einfach zu integrieren. Besonders bevorzugt ist es, sicherheitsrelevante Prozess- und Steuerdaten in dieser Weise getunnelt zu übertragen, da in diesem Fall bewährte und zertifizierte bzw. zugelassene Komponenten für die sicherheitsgerichtete Automatisierung genutzt werden können.

In einer weiteren Ausgestaltung sind den Stationen die Datenfelder des hinlaufenden Datenrahmens zum Belegen mit eigenen Sendedaten und die Datenfelder des zurücklaufenden Datenrahmens zum Auslesen von fremden Sendedaten individuell zugewiesen.

Diese Ausgestaltung ermöglicht eine sehr flexible und schnelle Übertragung von Informationen zwischen beliebigen Stationen an dem Kommunikationsmedium. Insbesondere ist es in dieser Ausgestaltung sehr leicht möglich, dass eine Station Informationen bzw. Daten von mehreren anderen Stationen in einem Übertragungszyklus empfängt. Die Station muss dazu lediglich die einzelnen Daten individuell aus dem zurücklaufenden Datenrahmen entnehmen.

In einer weiteren Ausgestaltung, die auch für sich genommen eine erfinderische Weiterentwicklung gegenüber bekannten Verfahren zum Übertragen von Daten in einem Steuerungssystem ist, lesen die Stationen die fremden Sendedaten aus dem zurücklaufenden Datenrahmen (oder aus verschiedenen zurücklaufenden Datenrahmen) aus und sortieren sie zu einem stationsspezifischen Datenwort um. Dementsprechend beinhaltet jede Station ein Kommunikationsmodul der oben genannten Art, mit einem Datensortierer, der dazu ausgebildet ist, fremde Sendedaten aus dem zurücklaufenden Datenrahmen zu einem stationsspezifischen Datenwort umzusortieren.

Alternativ hierzu wäre es beispielsweise auch möglich, die fremden Sendedaten schon beim Sender bzw. beim Senden in einer für den oder die Empfänger sinnvollen Art zusammenzustellen. Die bevorzugte Ausgestaltung besitzt demgegenüber eine größere Flexibilität, weil sich jede empfangende Station die für sie relevanten fremden Sendedaten individuell so zusammenstellten kann, dass die nachfolgende Datenverarbeitung in der empfangenden Station optimal durchgeführt werden kann. Insbesondere können Sendedaten so in unterschiedlichen, stationsspezifischen Kombinationen mehrfach unterschiedlich zusammengestellt werden. Besonders bevorzugt ist es dabei, wenn die empfängerspezifische Datensortierung in dem Kommunikationsmodul, also auf einer sehr niedrigen Ebene des OSI-Referenzmodells erfolgt, weil höher liegende Applikationen der empfangenden Station die umsortierten Daten dann sehr schnell und komfortabel verarbeiten können. Dies ermöglicht eine breite Interoperabilität. Darüber hinaus ist diese Ausgestaltung besonders vorteilhaft in Kombination mit der Verwendung von Folgerahmen und/oder der Verwendung eines Multiplexbetriebs der oben beschriebenen Art, weil die Zusammenstellung der Sendedaten über mehrere zurücklaufende Datenrahmen hinweg wesentlich vereinfacht wird.

In einer weiteren Ausgestaltung erzeugt die erste Station jeden hinlaufenden Datenrahmen mit einer Vielzahl von Statusfeldern, wobei jeder zweiten Station zumindest ein Statusfeld zugewiesen wird, und wobei jede zweite Station ihr Statusfeld bei jedem Durchlauf des hinlaufenden Datenrahmens ändert.

Mit Hilfe derartiger Statusfelder lässt sich auf sehr einfache Weise eine Lebensüberwachung realisieren. Dadurch, dass jede Station ihr Statusfeld beim Durchlauf ändert, kann die erste Station am Ende jedes Zyklus kontrollieren, ob die ursprünglich vorhandenen zweiten Stationen noch vorhanden und aktiv sind. Die Ausgestaltung ist besonders vorteilhaft, wenn mit Hilfe des neuen Verfahrens sicherheitsrelevante Prozess- und Steuerdaten übertragen werden sollen, da der Ausfall einer sicherheitsrelevanten Station einen sicherheitskritischen Zustand darstellt und eine entsprechende Fehlermeldung oder Fehlerbehandlungsroutine gestartet werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Steuerungssystems in einer schematischen Darstellung,
- Fig. 2: ein weiteres Ausführungsbeispiel des neuen Steuerungssystems in einer schematischen Darstellung,
- Fig. 3: ein symbolisches Diagramm zur Erläuterung des neuen Verfahrens,
- Fig. 4: Zeitdiagramme, die verschiedene Betriebsarten des neuen Steuerungssystems bzw. verschiedene Ausführungsbeispiele des neuen Verfahrens zeigen,
- Fig. 5: mehrere Ethernet-Telegramme, die in einem Ausführungsbeispiel des neuen Verfahrens zeitlich hintereinander gesendet werden,
- Fig. 6: mehrere Ethernet-Telegramme, die in einem weiteren Ausführungsbeispiel des neuen Verfahrens zeitlich hintereinander gesendet werden,
- Fig. 7: eine schematische Darstellung einer Station aus dem neuen Steuerungssystem, und
- Fig. 8: eine schematische Darstellung eines bevorzugten Ausführungsbeispiels, bei dem die Daten beim Auslesen aus den zurücklaufenden Datenrahmen umsortiert werden.

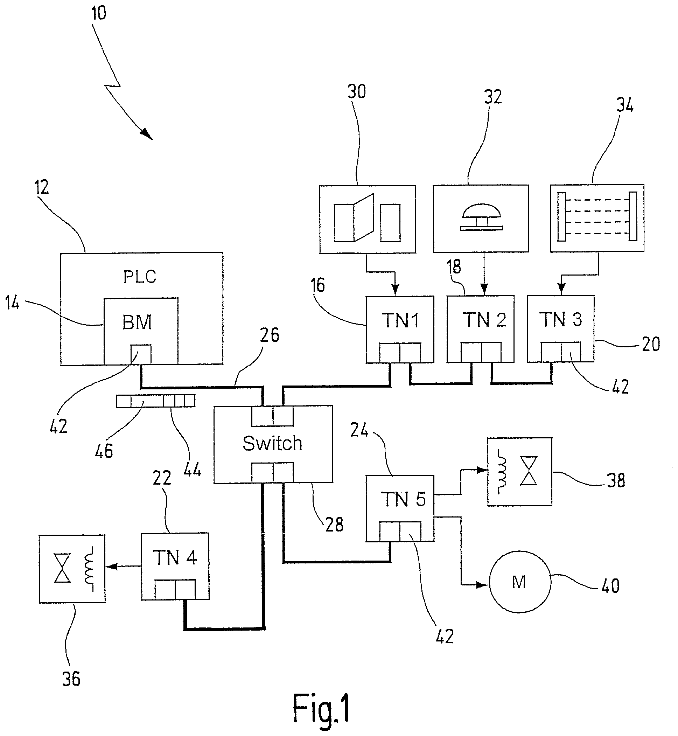

In Fig. 1 ist ein Ausführungsbeispiel des neuen Steuerungssystems in seiner Gesamtheit mit der Bezugsziffer 10 bezeichnet.

Das Steuerungssystem 10 beinhaltet eine Steuereinheit 12, beispielsweise in Form einer speicherprogrammierbaren Steuerung, die hier als PLC (programmable logic controller) bezeichnet ist. Alternativ hierzu könnte es sich auch um eine andere Steuereinheit handelt, beispielsweise ein Industrie-PC. Die Steuereinheit 12 übernimmt auf der Anwendungsebene die Steuerung einer hier nicht näher dargestellten technischen Anlage, wie z.B. einer Fertigungs- oder Förderanlage. Dazu verarbeitet sie Prozess- oder Zustandsdaten der Anlage, die mit Hilfe von Sensoren erfasst werden, und sie erzeugt Steuerdaten, mit denen Aktoren betätigt werden. Für die Kommunikation mit den Sensoren und Aktoren bedient sich die Steuereinheit 12 eines Kommunikationsnetzwerkes, das in der nachfolgend beschriebenen Weise ein Ausführungsbeispiel des neuen Verfahrens implementiert.

Für die Kommunikation mit den dezentralen Sensoren und Aktoren besitzt die Steuereinheit 12 hier einen so genannten Busmanager 14, der eine erste Station im Sinne der vorliegenden Erfindung ist. In anderen Ausführungsbeispielen der Erfindung kann der Busmanager getrennt von der Steuereinheit 12 implementiert sein. Die Steuereinheit 12 könnte in diesem Fall ein Kommunikationsmodul beinhalten, mit dessen Hilfe sie als zweite Station im Sinne der vorliegenden Erfindung an das Kommunikationsnetzwerk angeschlossen ist.

Das Steuerungssystem 10 beinhaltet ferner eine Vielzahl von Stationen 16, 18, 20, 22, 24, wobei die Stationen 16-22 zweite Stationen im Sinne der vorliegenden Erfindung sind, während die Station 24 in diesem Ausführungsbeispiel eine letzte Station im Sinne der Erfindung ist. In dem dargestellten Ausführungsbeispiel sind die Stationen 16-24 jeweils E/A-Baugruppen, die dazu ausgebildet sind, Eingangssignale von Sensoren aufzunehmen und Steuersignale an Aktoren abzugeben.

Der Busmanager 14 (und damit die Steuereinheit 12) ist über ein Kommunikationsmedium 26 mit den Stationen 16 bis 24 verbunden. Dabei beinhaltet das Kommunikationsmedium 26 in diesem Fall einen Switch 28, der hier beispielhaft für eine mögliche Realisierung dargestellt ist. Konkret ist der Busmanager 14 hier über ein Ethernet-Kabel mit einem Anschluss des Switches 28 verbunden. Ein zweiter Anschluss des Switches 28 ist über ein weiteres Ethernet-Kabel mit einem ersten Anschluss der Station 16 verbunden. Ein zweiter Anschluss der Station 16 ist über ein weiteres Ethernet-Kabel mit einem ersten Anschluss der Station 18 verbunden. Schließlich ist die Station 18 über einen zweiten Anschluss und ein weiteres Ethernet-Kabel mit der Station 20 verbunden. Der Busmanager 14, der Switch 28 und die Stationen 16-20 sind damit physikalisch in einer Reihe angeordnet, wobei jeder Teilnehmer über eine Punkt-zu-Punkt-Verbindung mit seinem Nachbarn in der Reihe verbunden ist.

Der Switch 28 ist in diesem Ausführungsbeispiel ferner über einen dritten Anschluss und ein weiteres Ethernet-Kabel mit der Station 22 sowie über einen vierten Anschluss und ein weiteres Ethernet-Kabel mit der Station 24 verbunden. Das Kommunikationsnetzwerk des Steuerungssystems 10 besitzt damit in diesem Ausführungsbeispiel eine Mischform von einer Reihen- und einer Stern-Topologie. Logisch sind jedoch sämtliche Stationen 16-24 und der Busmanager 14 in einer Reihe angeordnet, wie nachfolgend noch weiter erläutert ist.

In diesem vereinfachten Ausführungsbeispiel ist an die Station 16 eine Schutztür 30 angeschlossen. Dabei handelt es sich um einen Sensor, mit dessen Hilfe der Öffnungs- oder Schließzustand einer Schutztür überwacht werden kann. In ähnlicher Weise ist an die Station 18 ein Not-Aus-Taster 32 und an die Station 20 ein Lichtgitter 34 angeschlossen. Die drei genannten Sensoren 30, 32, 34 sind typische Beispiele von Sensoren zur Absicherung einer automatisiert arbeitenden Anlage. Es versteht sich, dass die vorliegende Erfindung nicht auf die Verwendung von solchen Sicherheitssensoren beschränkt ist, d.h. an die Stationen 16-20 können gleichermaßen auch Sensoren für Standardsteuerungsaufgaben angeschlossen sein.

An die Stationen 22 und 24 sind hier beispielhaft Magnetventile 36, 38 sowie ein Antrieb 40 angeschlossen. Hierbei handelt es sich um typische Aktoren, die bei einer automatisiert gesteuerten Anlage Verwendung finden, wenngleich die vorliegende Erfindung nicht auf diese Aktoren beschränkt ist.

Die Verbindung der einzelnen Stationen mit dem Busmanager und dem Switch ist in diesem Ausführungsbeispiel über Ethernet-Kabel CAT5 realisiert. Dementsprechend sind die einzelnen Anschlüsse 42 der Stationen, des Busmanagers und des Switches als RJ45-Anschlüsse 42 realisiert. In anderen Ausführungsbeispielen der Erfindung können jedoch auch andere Leitungen, beispielsweise Glasfaserkabel, oder auch Funkstrecken (z.B. WLAN) zum Einsatz kommen.

Gemäß dem neuen Verfahren erzeugt der Busmanager 14 in regelmäßigen Zeitabständen ein Bustelegramm 44, das einen Datenrahmen 46 mit einer Vielzahl von Datenfeldern (hier nicht gesondert gezeigt) beinhaltet. In dem Ausführungsbeispiel in Fig. 1 ist das Bustelegramm 44 ein Ethernet-kompatibles Telegramm mit einem Ethernet-Header am Anfang und einer abschließenden Prüfsumme. Der vom Ethernet-Telegramm zur Verfügung gestellte Datenbereich ist der Datenrahmen 46.

Der Busmanager 14 versendet das Bustelegramm 44 an die Station 16, die ihm in der logischen Reihe nachfolgt. Dabei adressiert er die Station 16 in der vom Ethernet bekannten Weise über ihre MAC-Adresse. Die Station 16 empfängt das Bustelegramm 44, belegt ein ihr zugewiesenes Datenfeld in einer nachfolgend beschriebenen Weise mit Sendedaten und sendet den Datenrahmen 46 mit einem neuen Ethernet-kompatiblen Bustelegramm (hier nicht gezeigt) an die nächstfolgende Station 18. Dabei adressiert die Station 16 die Station 18 wiederum über deren MAC-Adresse. In gleicher Weise überträgt die Station 18 den Datenrahmen an die Station 20. Die Station 20 sendet den Datenrahmen als nächstes an die Station 22. Von dort wird der Datenrahmen an die Station 24 weitergesendet, und anschließend läuft der Datenrahmen 24 in umgekehrter Reihenfolge durch die Stationen 22 bis 16 und anschließend zum Busmaster 14. Die Weitergabe des Datenrahmens 46 erfolgt dabei von einer Station zur nächsten unter Verwendung der jeweiligen MAC-Adresse der Zielstation. Der Switch 28 ist transparent, d.h. er ist zwar physisch vorhanden, leitet den Datenrahmen 46 jedoch lediglich von der jeweils sendenden Station an die adressierte Empfängerstation, ohne dass der Datenrahmen 46 dabei verändert wird.

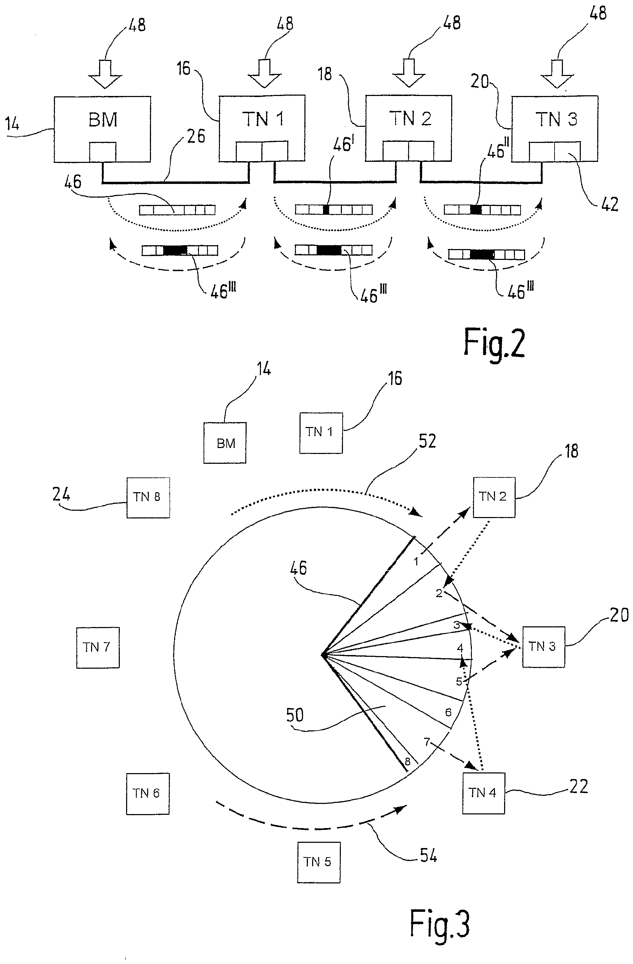

Fig. 2 zeigt die Weitergabe des Datenrahmens 46 von einer Station zur nächsten und zurück in einem vereinfachten Ausführungsbeispiel, in dem die physikalische Topologie des Kommunikationsnetzwerkes auch der logischen Reihe entspricht. Gleiche Bezugszeichen bezeichnen dabei dieselben Elemente wie zuvor.

Der Datenrahmen 46 wird zunächst vom Busmanager 14 an die Station 16 gesendet, wobei der Busmanager 14 die Station 16 über ihre MAC-Adresse adressiert. Die Station 16 belegt ein ihr zugewiesenes Datenfeld innerhalb des Datenrahmens 46 mit Sendedaten und sendet einen Datenrahmen 46' mit den neuen Sendedaten an die Station 18. Die Station 18 legt ihre Sendedaten in ein ihr zugewiesenes Datenfeld und sendet einen Datenrahmen 46" mit den Sendedaten der Station 16 und der Station 18 an die Station 20. Die Station 20 belegt ein ihr zugewiesenes Datenfeld mit ihren Sendedaten und sendet einen Datenrahmen 46'" mit allen Sendedaten wieder an die Station 18 zurück. Auf dem Rückweg durchläuft der Datenrahmen 46'" sämtliche Stationen, bis er beim Busmanager 14 ankommt. Jede Station einschließlich des Busmanagers kann dadurch fremde Sendedaten der anderen Stationen lesen, sofern dies entsprechend konfiguriert ist.

Die Zuweisung, welche Datenfelder die einzelnen Stationen 16 bis 20 mit eigenen Sendedaten belegen dürfen, und welche Datenfelder mit fremden Sendedaten die Stationen 16 bis 20 und der Busmanager 14 auslesen dürfen, wird in einem Konfigurationsmodus vor Aufnahme des Steuerungsbetriebes individuell eingestellt, was durch Blockpfeile 48 symbolisch dargestellt ist.

Fig. 3 zeigt den zyklischen Umlauf des Datenrahmens 46 und die Belegung sowie das Auslesen einzelner Datenfelder in einer symbolischen Darstellung. Der Datenrahmen 46 ist hier als Kreissegment mit acht Datenfeldern 50 unterschiedlicher Größe dargestellt. Jeder der hier acht Stationen ist ein Datenfeld 50 exklusiv zum Belegen mit Sendedaten zugewiesen. Beispielsweise belegt die Station 18 das Datenfeld 2 mit Sendedaten, die Station 20 belegt das Datenfeld 3, und die Station 22 belegt das Datenfeld 4. Das Belegen der Datenfelder 50 mit Sendedaten erfolgt jeweils dann, wenn die Stationen den Datenrahmen 46 von der vorhergehenden Station empfangen haben und bevor oder während die Stationen den Datenrahmen 46 an die nachfolgende Station weitersenden. Das Empfangen und Weitersenden des Datenrahmens 46 ist anhand des Pfeils 52 symbolisch dargestellt.

Wenn der mit allen Sendedaten belegte Datenrahmen 46 von der letzten Station 24 in umgekehrter Richtung zurückgesendet wird (Pfeil 54), können die einzelnen Stationen fremde Sendedaten aus den anderen Datenfeldern auslesen. Beispielhaft zeigt Fig. 3, dass die Station 18 Sendedaten aus dem Datenfeld 1, also Sendedaten der Station 16, ausliest. Die Station 20 liest hier Sendedaten aus den Datenfeldern 2 und 5 und die Station 22 aus dem Datenfeld 7. Wenn der Datenrahmen 46 einmal vom Busmanager 14 zur letzten Station 24 und wieder zurück gesendet wurde, haben alle beteiligten Stationen die Möglichkeit gehabt, eigene Sendedaten zu versenden und fremde Sendedaten auszulesen.

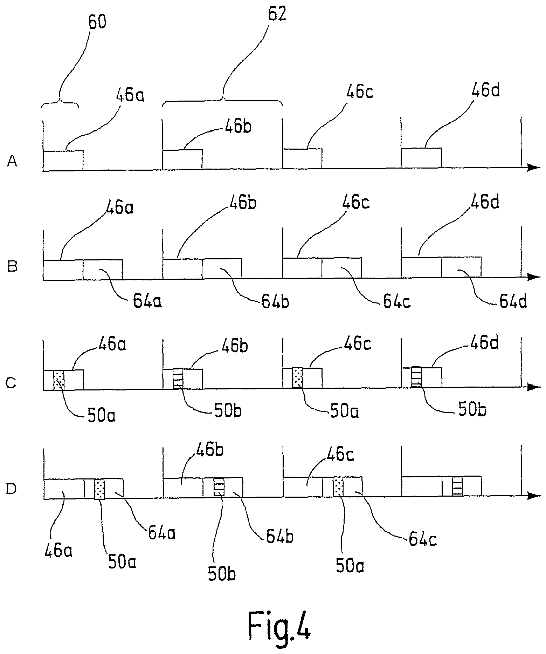

Fig. 4 zeigt die zeitliche Abfolge beim Versenden der Datenrahmen 46 in verschiedenen Ausführungsbeispielen der Erfindung. Bei Bezugsziffer 60 ist die Länge eines Datenrahmens 46 (genau genommen eines Bustelegramms 44, das den Datenrahmen 46 beinhaltet) angegeben. Bezugsziffer 62 bezeichnet die Zykluszeit, d.h. die Zeit zwischen dem Erzeugen zweier aufeinanderfolgender, jedoch voneinander unabhängiger Datenrahmen 46.

Fig. 4A zeigt ein Zeitdiagramm, bei dem in jeder Zykluszeit 62 genau ein Datenrahmen 46 erzeugt und versendet wird. In dem bevorzugten Ausführungsbeispiel der Erfindung muss der Datenrahmen 46 auch innerhalb der Zykluszeit 62 wieder beim Busmanager 14 eintreffen, so dass der Busmanager 14 gegebenenfalls einen Wiederholrahmen in der nächsten Zykluszeit 62 versenden kann. Diese bevorzugte Ausführung besitzt den Vorteil, dass auf den Verbindungsstrecken zwischen den einzelnen Stationen stets jeweils nur ein Bustelegramm 44 unterwegs ist, wodurch Ethernet-typische Kollisionen vermieden sind. Alternativ hierzu ist es jedoch grundsätzlich möglich, einen zweiten Datenrahmen 46b schon zu versenden, bevor der erste Datenrahmen 46a wieder beim Busmanager 14 ankommt.

Fig. 4B zeigt ein Ausführungsbeispiel, in dem der Busmanager 14 in jeder Zykluszeit 62 zwei unmittelbar aufeinanderfolgende Datenrahmen 46, 64 erzeugt und versendet. Der jeweils zweite Datenrahmen 64 ist ein so genannter Folgerahmen, der mit einem eigenen Bustelegramm versendet wird. Logisch gehören die beiden Datenrahmen 46, 64 jedoch zusammen, d.h. die Aufteilung in zwei getrennte Rahmen 46, 64 geschieht hier nur, um die Telegrammbreite der Ethernet-Spezifikation einzuhalten, selbst wenn die Anzahl der im Ethernet-Telegramm zur Verfügung gestellten Datenwörter (typischerweise 1500 Byte) nicht ausreicht, um für alle angeschlossen Stationen die benötigten Datenfelder bereitzustellen.

Fig. 4C zeigt ein Ausführungsbeispiel, bei dem einzelne Datenfelder 50 im Multiplexbetrieb genutzt werden. In einem ersten Übertragungszyklus wird das Datenfeld 50a beispielsweise von der Station 18 mit Sendedaten belegt. Im nachfolgenden Übertragungszyklus wird dasselbe Datenfeld (nun als 50b bezeichnet) statt dessen von der Station 20 mit Sendedaten belegt. Im dritten Übertragungszyklus belegt wiederum die Station 18 das Datenfeld 50a usw. Gleichzeitig können die übrigen Datenfelder des Datenrahmens 46 anderen Stationen alleine zugewiesen sein. Wie bereits erwähnt, ist es mit Hilfe des Multiplexbetriebes möglich, einzelnen Stationen zeitlich enger aufeinanderfolgende Übertragungszyklen zu ermöglichen als anderen Stationen.

Fig. 4D zeigt ein Ausführungsbeispiel, das sowohl von Folgerahmen gemäß 4B als auch von dem Multiplexbetrieb gemäß 4C Gebrauch macht. Bevorzugterweise werden die Datenfelder des Multiplexbetriebs dabei nur in den Folgerahmen 64 übertragen.

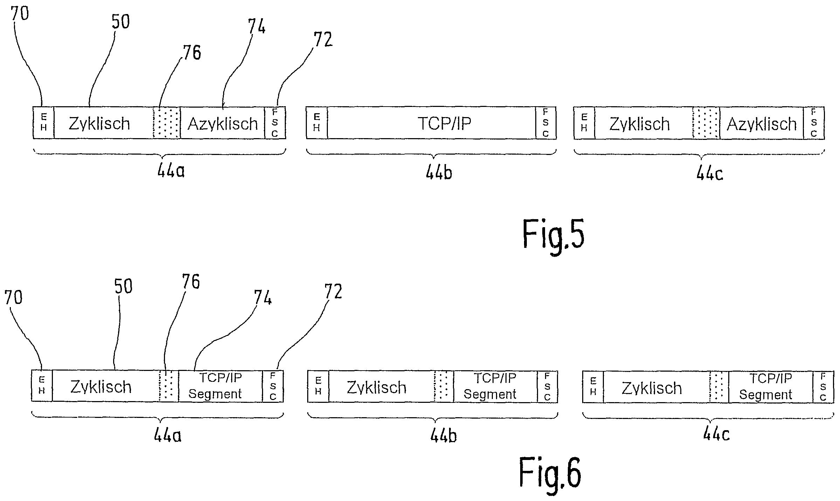

Fig. 5 zeigt ein Ausführungsbeispiel des neuen Verfahrens, bei dem verschiedene Ethernet-Bustelegramme 44a, 44b und 44c über das Kommunikationsmedium 26 übertragen werden. Jedes Ethernet-Bustelegramm besitzt in bekannter Weise einen Ethernet-Header 70 und eine Prüfsumme 72. Der Ethernet-Header 70 beinhaltet unter anderem die MAC-Adressen des Senders und des Empfängers, wie dies für Ethernet-kompatible Kommunikationsmedien spezifiziert ist. Im Datenbereich des Ethernet-Telegramms sind die Datenfelder 50 untergebracht, die den einzelnen Stationen individuell zugeordnet sind. Die Datenfelder 50 sind in Fig. 5 nicht getrennt dargestellt, jedoch mit dem Begriff "zyklisch" bezeichnet, da die individuell zugewiesenen Datenfelder vorzugsweise für die zyklische Übertragung von Daten in jedem n-ten Bustelegramm mit n = 1, 2, 3 ... verwendet werden. Darüber hinaus beinhaltet das Bustelegramm 44 hier in seinem Datenbereich einen azyklischen Datenbereich 74. Den azyklischen Datenbereich können die einzelnen Stationen auf Anforderung mit Sendedaten belegen. Wenn der azyklische Datenbereich 74 von einer Station mit Sendedaten belegt wurde, wird dies über ein Belegtflag (hier nicht dargestellt) signalisiert, welches beispielsweise zu Beginn des azyklischen Bereichs vorgesehen sein kann. Eine Station, die Daten in dem azyklischen Datenbereich 74 versenden möchte, kann dies daher nur dann tun, wenn der azyklische Datenbereich 74 nicht bereits von einer vorhergehenden Station belegt ist. Letzteres kann anhand des Belegtflags (nicht dargestellt) einfach erkannt werden.

In einem besonders bevorzugten Ausführungsbeispiel der Erfindung können zwischen zwei derartigen Ethernet-Bustelegrammen 44a, 44c weitere Ethernet-Bustelegramme 44b übertragen werden, wobei die weiteren Telegramme 44b beispielsweise eine Protokollstruktur gemäß TCP/IP einhalten. Auf diese Weise können neben den Steuerdaten für das Steuerungssystem 10 auch andere Daten übertragen werden. Beispielsweise kann so ein an das Kommunikationsmedium 26 angeschlossener PC Druckerdaten an einen ebenfalls an das Kommunikationsmedium angeschlossenen Drucker übertragen, wobei diese Daten vollkommen unabhängig von den Steuerdaten sein können.

Fig. 6 zeigt ein weiteres Ausführungsbeispiel, wie Steuerdaten und andere Daten gemeinsam über das Kommunikationsmedium 26 übertragen werden können. Im Unterschied zu dem Ausführungsbeispiel gemäß Fig. 5 werden die TCP/IP-kompätiblen Daten hier in dem azyklischen Datenbereich 74 jedes Bustelegramms 44a, 44b, 44c übertragen. Diese Alternative ist besonders bevorzugt, wenn die Zykluszeit des Systems eine gesonderte Übertragung von herkömmlichen Ethernet-Telegrammen nicht oder nur bei erhöhtem Kollisionsrisiko zulässt. Die Datenfelder 50 für die zyklische Übertragung von Steuerdaten werden jedoch in den bevorzugten Ausführungsbeispielen der Erfindung stets für die jeweiligen Stationen, denen die Datenfelder 50 individuell zugewiesen sind, freigehalten.

Gemäß einem weiteren Ausführungsbeispiel beinhalten die Bustelegramme 44 in den Darstellungen der Fig. 5 und 6 noch einen weiteren Datenbereich 76, der dazu verwendet wird, Telegrammdaten zu übertragen, die zu einem herkömmlichen Feldbustelegramm kompatibel sind. In einem besonders bevorzugten Ausführungsbeispiel werden in dem Datenbereich 76 Sendedaten übertragen, die den Spezifikationen des sogenannten SafetyBUS p entsprechen. Hierbei handelt es sich um ein spezielles Bussystem auf Basis des CAN-Bus (CAN-kompatibel), bei dem durch eine zusätzliche Protokollebene die Übertragung von sicherheitsrelevanten Steuerdaten möglich ist. In einem besonders bevorzugten Ausführungsbeispiel werden in den Datenfeldern 50 Steuerdaten für Standard-Steueraufgaben übertragen, in dem Datenbereich 74 werden SafetyBUS p-kompatible sicherheitsrelevante Steuerdaten, wie z.B. die Zustandsinformationen der Sicherheitssensoren 30, 32, 34 sowie Stoppbefehle für die Aktoren 36 bis 40 übertragen, und in dem Datenbereich 74 werden Diagnosedaten übertragen, die die einzelnen Stationen jeweils nur auf individuelle Anforderung versenden.

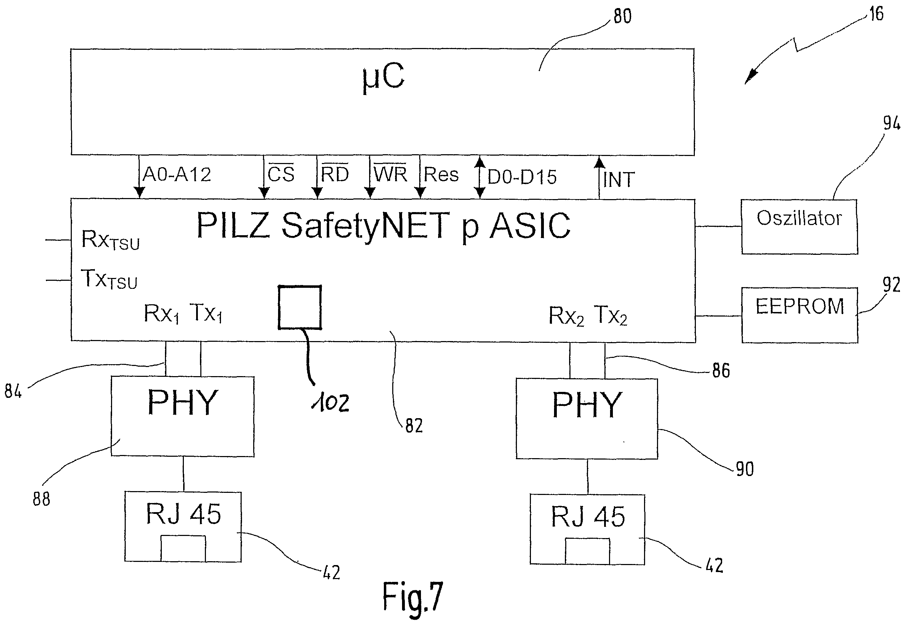

Fig. 7 zeigt in einem vereinfachten Blockschaltbild den strukturellen Aufbau einer einzelnen Station, wie z.B. der Station 16. Bezugsziffer 80 bezeichnet einen Microcontroller, der stellvertretend für die Anwendungsebene der Station 16 steht. Der Microcontroller implementiert die Funktion der Station 16 innerhalb des Steuerungssystems 10, in diesem Fall also die Funktion der E/A-Baugruppe. Anstelle eines Microcontrollers kann hier auch eine andere Komponente verwendet werden, die eine applikationsspezifische Aufgabe erfüllt, beispielsweise ein PC oder ein anwendungsspezifisches IC (ASIC).

Die Applikation 80 kommuniziert mit einem Kommunikationsmodul 82, das dazu ausgebildet ist, das Kommunikationsprotokoll gemäß dem erfindungsgemäßen Verfahren zu implementieren. In dem bevorzugten Ausführungsbeispiel, bei dem das Kommunikationsmedium 26 eine Ethernet-kompatible Übertragungsstrecke ist, ist das Kommunikationsmodul 82 über zwei Anschlüsse 84, 86 mit jeweils einem Protokollbaustein 88, 90 verbunden. Die Protokollbausteine 88, 90 führen auf die RJ45-Anschlüsse 42 und erzeugen die Ethernet-kompatiblen Bustelegramme 44, in die die Datenrahmen 46 gemäß der vorliegenden Erfindung eingebettet sind. Die Datenrahmen 46 sowie die Datenbereiche 74, 76 (sofern verwendet) werden von dem Kommunikationsmodul 82 erzeugt. Des Weiteren beinhaltet jede Station 16 einen Speicher 92, in dem unter anderem die Konfigurationsdaten abgelegt sind, mit denen jeder Station Datenfelder 50 zum Schreiben und Lesen von eigenen bzw. fremden Sendedaten zugewiesen werden. Ein Oszillator 94 erzeugt einen Referenztakt.

In dem Ausführungsbeispiel gemäß Fig. 7 ist das Kommunikationsmodul 82 als ASIC realisiert, was insbesondere für kurze Zykluszeiten von beispielsweise 62,5 *µ*s oder 125 *µ*s bevorzugt ist. Alternativ hierzu kann das Kommunikationsmodul 82 auch als Softwarebaustein realisiert sein, der auf einer geeigneten Hardwareplattform abläuft. Letzteres ist insbesondere bei längeren Zykluszeiten von beispielsweise 1 ms oder 5 ms bevorzugt.

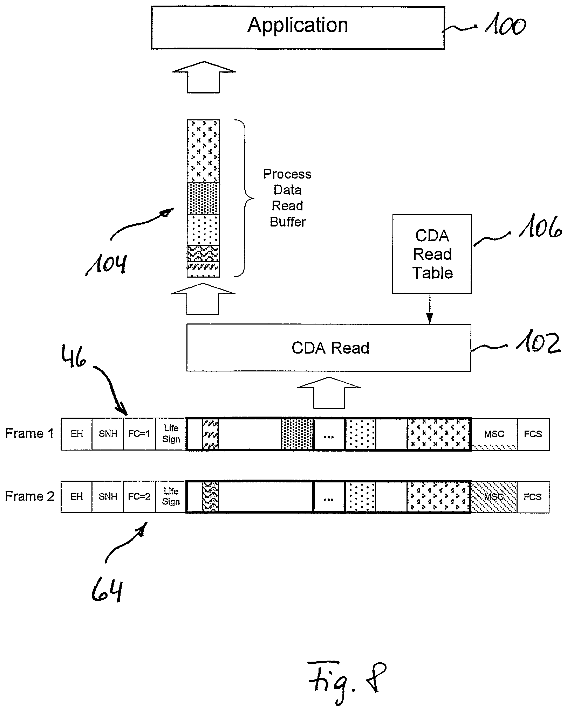

Fig. 8 zeigt eine schematische Darstellung eines bevorzugten Ausführungsbeispiels, bei die Sendedaten aus zwei aufeinanderfolgenden, zurücklaufenden Datenrahmen 46, 64 beim Auslesen so umsortiert bzw. neu zusammengestellt werden, dass sie in einer für die Applikation 100 optimal verarbeitbaren Form vorliegen. Die ausgelesenen Sendedaten werden dazu in einem Datensortierer 102 zu einem neuen Datenwort oder Datenrahmen 104 zusammengestellt, auf den die Applikation 100 zugreift. Der Datensortierer verwendet dazu eine Sortiertabelle 106, die er bei der Initialisierung des Systems vom Busmanager 14 zugewiesen bekommt. Wie anhand der verschiedenen Muster dargestellt ist, kann der Datensortierer 102 einzelne Sendedaten aus aufeinanderfolgenden zurücklaufenden Datenrahmen 46, 64 auslesen und in einem neuen Datenwort 104 zusammenstellen, was einen besonders vorteilhaften Betrieb mit Folgerahmen ermöglicht. Des weiteren kann der Datensortierer 102 auch die im Multiplexbetrieb wechselweise belegten Datenfelder jeweils richtig zuordnen. Hierzu dienen ihm ein Datenrahmenzähler (Frame Counter FC) und ein Zykluszähler (hier nicht dargestellt). Der erste zählt bzw. identifiziert die aufeinanderfolgenden Folgerahmen innerhalb eines Übertragungszyklus, der zweite unterscheidet Datenrahmen aus unterschiedlichen Übertragungszyklen.

Die bevorzugten Ausführungsbeispiele der Erfindung wurden anhand eines Ethernet-kompatiblen Kommunikationsmediums erläutert. Dies ist vor allem deshalb bevorzugt, weil Ethernet eine verbreitete Kommunikationsplattform ist und die benötigten Hardware- und Softwarekomponenten daher kommerziell sehr günstig zur Verfügung stehen. Alternativ hierzu kann die vorliegende Erfindung grundsätzlich jedoch auch auf anderen Kommunikationsmedien implementiert werden.

## Patentansprüche

1. Verfahren zum Übertragen von Daten in einem Steuerungssystem (10) mit einer Vielzahl von räumlich verteilten Stationen (14-24), die über ein Kommunikationsmedium (26) miteinander verbunden sind, wobei die Stationen (14-24) logisch in einer Reihe angeordnet sind, die eine erste Station (14), zumindest eine zweite Station (16-22) und eine letzte Station (24) definiert, wobei die Stationen zumindest eine Steuereinheit (12) beinhalten, die dazu ausgebildet ist, Prozessdaten zyklisch zu verarbeiten und in Abhängigkeit davon Steuerdaten zu erzeugen, sowie eine Vielzahl von E/A-Baugruppen (14-24), die dazu ausgebildet sind, Prozessdaten an die Steuereinheit (12) zu senden und Steuerdaten von der Steuereinheit (12) zu empfangen, wobei die folgenden Schritte innerhalb eines Übertragungszyklus ausgeführt werden:
- die erste Station (14) erzeugt einen Datenrahmen (46) mit einer Vielzahl von Datenfeldern (50), wobei jeder zweiten Station (16-22; 16-18) und der letzten Station (24; 20) zumindest ein Datenfeld (50) zum Belegen mit jeweils eigenen Prozess- und/oder Steuerdaten eindeutig zugewiesen ist,
- die erste Station (14) sendet den Datenrahmen (46) als hinlaufenden Datenrahmen (46', 46") an diejenige zweite Station (16), die der ersten Station (14) in der Reihe nachfolgt,
- jede zweite Station (16-22; 16-18) empfängt den hinlaufenden Datenrahmen (46', 46") von der jeweils vorhergehenden Station in der Reihe, belegt ein ihr zugewiesenes Datenfeld (50) mit jeweils eigenen Prozess- und/oder Steuerdaten und sendet den hinlaufenden Datenrahmen (46', 46") mit den Prozess- und/oder Steuerdaten an die in der Reihe nachfolgende Station, und
- die letzte Station (24; 20) empfängt den hinlaufenden Datenrahmen (46") von der vorhergehenden Station in der Reihe, belegt ein ihr zugewiesenes Datenfeld (50) mit letzten Prozess- und/oder Steuerdaten und sendet den Datenrahmen mit allen Prozess- und/oder Steuerdaten als zurücklaufenden Datenrahmen (46'") an die Reihe der Stationen zurück,
wobei die Stationen (14-24) fremde Prozess- und/oder Steuerdaten der anderen Stationen aus den Datenfeldern (50) des zurücklaufenden Datenrahmens (46'") lesen.

2. Verfahren nach Anspruch 1, **dadurch gekennzeichnet, dass** die erste Station (14) den hinlaufenden Datenrahmen (46) in festgelegten Zeitabständen (62) zyklisch erzeugt und an die nachfolgende zweite Station (16) absendet.

3. Verfahren nach Anspruch 1 oder 2, **dadurch gekennzeichnet, dass** der Datenrahmen (46) zumindest eine erste und eine zweite Gruppe von Datenfeldern (50, 74) beinhaltet, wobei die Datenfelder der ersten Gruppe (50) den einzelnen Stationen (14-24) über alle Datenrahmen (46) hinweg fest zugewiesen werden und wobei die Datenfelder (74) der zweiten Gruppe den Stationen (14-24) auf individuelle Anforderung für jeweils einen Datenrahmen (46) zugewiesen werden.

4. Verfahren nach einem der Ansprüche 1 bis 3, **dadurch gekennzeichnet, dass** der zurücklaufende Datenrahmen (46'") die Reihe der Stationen (14-24) in umgekehrter Reihenfolge durchläuft wie der hinlaufende Datenrahmen (46', 46").

5. Verfahren nach einem der Ansprüche 1 bis 4, **dadurch gekennzeichnet, dass** die erste Station (14) überwacht, ob der zurücklaufende Datenrahmen (46'") innerhalb einer definierten Zeitspanne eintrifft.

6. Verfahren nach einem der Ansprüche 1 bis 5, **dadurch gekennzeichnet, dass** das Kommunikationsmedium (26) eine Ethernet-kompatible Übertragungsstrecke ist, und dass der Datenrahmen (46) ein Ethernet-kompatibler Datenrahmen ist.

7. Verfahren nach einem der Ansprüche 1 bis 6, **dadurch gekennzeichnet, dass** zumindest jede zweite Station (16-22) den hinlaufenden Datenrahmen (46) im cut-through-Verfahren an die nachfolgende Station der Reihe versendet.

8. Verfahren nach einem der Ansprüche 1 bis 7, **dadurch gekennzeichnet, dass** jede Station (14-24) den hinlaufenden Datenrahmen (46) an genau eine nachfolgende Station sendet.

9. Verfahren nach einem der Ansprüche 1 bis 8, **dadurch gekennzeichnet, dass** die erste Station (14) mehrere Datenrahmen (46, 64) erzeugt und in unmittelbarer zeitlicher Abfolge als hinlaufende Datenrahmen an die nachfolgende zweite Station (16) versendet.

10. Verfahren nach einem der Ansprüche 1 bis 9, **dadurch gekennzeichnet, dass** einzelne Datenfelder (50a, 50b) wechselweise von zumindest zwei Stationen mit Prozess- und/oder Steuerdaten belegt werden.

11. Verfahren nach einem der Ansprüche 1 bis 10, **dadurch gekennzeichnet, dass** einzelne Stationen (14-24) zumindest ein Datenfeld (76) des Datenrahmens mit Prozess- und/oder Steuerdaten belegen, die zu einem Feldbustelegramm kompatibel sind.

12. Verfahren nach einem der Ansprüche 1 bis 11, **dadurch gekennzeichnet, dass** den Stationen (14-24) die Datenfelder des hinlaufenden Datenrahmens (46', 46") zum Belegen mit eigenen Prozess- und/oder Steuerdaten und die Datenfelder des zurücklaufenden Datenrahmens (46'") zum Auslesen von fremden Prozess- und/oder Steuerdaten individuell zugewiesen werden (48).

13. Verfahren nach einem der Ansprüche 1 bis 12, **dadurch gekennzeichnet, dass** die Stationen (14-24) die fremden Prozess- und/oder Steuerdaten aus dem zurücklaufenden Datenrahmen (46'")auslesen und zu einem stationsspezifischen Datenwort umsortieren.

14. Verfahren nach einem der Ansprüche 1 bis 13, **dadurch gekennzeichnet, dass** die erste Station (14) jeden hinlaufen-den Datenrahmen (46) mit einer Vielzahl von Statusfeldern erzeugt, wobei jeder zweiten Station (16-22) zumindest ein Statusfeld zugewiesen wird, und wobei jede zweite Station (16-22) ihr Statusfeld beim Durchlauf des hinlaufenden Datenrahmens (46) ändert.

15. Steuerungssystem zum Übertragen von Prozess- und Steuerdaten einer technischen Anlagen, dazu ausgebildet, das Verfahren nach Anspruch 1 auszuführen, mit einer Vielzahl von räumlich verteilten Stationen (14-24), die über ein Kommunikationsmedium (26) miteinander verbunden sind, wobei die Stationen (14-24) logisch in einer Reihe angeordnet sind, die eine erste Station (14), zumindest eine zweite Station (16-22) und eine letzte Station (24) definiert, und wobei mindestens eine Station eine Steuereinheit (12) zum Verarbeiten der Prozessdaten und zum Erzeugen von Steuerdaten umfasst und zumindest eine Station eine E/A-Baugruppe zum Aufnehmen von Eingangssignalen von Sensoren und zum Abgeben von Steuersignalen an Aktoren umfasst,
wobei die erste Station (14) ein erstes Kommunikationsmodul (82) besitzt, das dazu ausgebildet ist, einen Datenrahmen (46) mit einer Vielzahl von Datenfeldern (50) zu erzeugen, wobei jeder zweiten Station (16-22; 16-18) und der letzten Station (24; 20) zumindest ein Datenfeld (50) zum Belegen mit jeweils eigenen Prozess- und/oder Steuerdaten eindeutig zugewiesen ist,
wobei das erste Kommunikationsmodul ferner dazu ausgebildet ist, den Datenrahmen (46) als hinlaufenden Datenrahmen (46', 46") an diejenige zweite Station (16) zu senden, die der ersten Station (14) in der Reihe nachfolgt,
wobei jede zweite Station (16-22; 16-18) ein zweites Kommunikationsmodul (82) besitzt, das dazu ausgebildet ist, den hinlaufenden Datenrahmen (46', 46") von der jeweils vorhergehenden Station in der Reihe zu empfangen, ein ihr zugewiesenes Datenfeld (50) mit jeweils eigenen Prozess- und/oder Steuerdaten zu belegen und den hinlaufenden Datenrahmen (46', 46") mit den Prozess- und/oder Steuerdaten an die in der Reihe nachfolgende Station zu senden, und
wobei die letzte Station (24; 20) ein drittes Kommunikationsmodul (82) besitzt, das dazu ausgebildet ist, den hinlaufenden Datenrahmen (46', 46") von der vorhergehenden Station in der Reihe zu empfangen, ein ihr zugewiesenes Datenfeld mit letzten Prozess- und/oder Steuerdaten zu belegen und den Datenrahmen mit allen Prozess- und/oder Steuerdaten als zurücklaufenden Datenrahmen (46'") an die Reihe der Stationen zurückzusenden,
wobei die Stationen (14-24) dazu ausgebildet sind, fremde Prozess- und/oder Steuerdaten der anderen Stationen aus den Datenfeldern (50) des zurücklaufenden Datenrahmens (46'") zu lesen.

## Claims

1. A method for transmitting data in a control system (10) comprising a plurality of spatially distributed stations (14-24) which are connected to one another via a communication medium (26), the stations (14-24) being logically arranged in a series which defines a first station (14), at least one second station (16-22) and a last station (24), wherein the stations comprise at least one control unit (12) designed to cyclically process process data and to generate control data on the basis thereof, and also comprise a plurality of I/O units (14-24) designed to send process data to the control unit (12) and to receive control data from the control unit (12), wherein the following steps are carried out within one transmission cycle:
- the first station (14) generates a data frame (46) having a plurality of data fields (50), with every second station (16-22; 16-18) and the last station (24; 20) being clearly assigned at least one data field (50) for filling with its respective process and/or control data,
- the first station (14) sends the data frame (46) as an outgoing data frame (46', 46") to that second station (16) which comes after the first station (14) in the series,
- every second station (16-22; 16-18) receives the outgoing data frame (46', 46") from the respective previous station in the series, fills a data field (50) assigned to it with its respective process and/or control data and sends the outgoing data frame (46', 46") with the process and/or control data to the next station in the series, and
- the last station (24; 20) receives the outgoing data frame (46") from the previous station in the series, fills a data field (50) assigned to it with last process and/or control data and returns the data frame with all the process and/or control data as a returning data frame (46'") to the series of stations, wherein the stations (14-24) read extraneous process and/or control data of the other stations from the data fields (50) of the returning data frame (46"').

2. The method as claimed in claim 1, **characterized in that** the first station (14) generates the outgoing data frame (46) cyclically at predetermined intervals of time (62) and sends it to the next second station (16).

3. The method as claimed in claim 1 or 2, **characterized in that** the data frame (46) contains at least a first and a second group of data fields (50, 74), where the data fields in the first group (50) are firmly assigned to the individual stations (14-24) over all the data frames (46) and where the data fields (74) in the second group are assigned to the stations (14-24) upon individual request for a respective data frame (46).

4. The method as claimed in one of claims 1 to 3, **characterized in that** the returning data frame (46') passes through the series of stations (14-24) in the opposite order from the outgoing data frame (46', 46").

5. The method as claimed in one of claims 1 to 4, **characterized in that** the first station (14) monitors whether the returning data frame (46'") arrives within a defined time period.

6. The method as claimed in one of claims 1 to 5, **characterized in that** the communication medium (26) is an Ethernet-compatible transmission link, and the data frame (46) is an Ethernet-compatible data frame.

7. The method as claimed in one of claims 1 to 6, **characterized in that** at least every second station (16-22) sends the outgoing data frame (46) to the next station in the series using the cut-through method.

8. The method as claimed in one of claims 1 to 7, **characterized in that** every station (14-24) sends the outgoing data frame (46) to precisely one next station.

9. The method as claimed in one of claims 1 to 8, **characterized in that** the first station (14) generates a plurality of data frames (46, 64) and sends them to the next second station (16) in direct succession as outgoing data frames.

10. The method as claimed in one of claims 1 to 9, **characterized in that** individual data fields (50a, 50b) are filled with process and/or control data alternately by at least two stations.

11. The method as claimed in one of claims 1 to 10, **characterized in that** individual stations (14-24) fill at least one data field (76) in the data frame with process and/or control data which are compatible with a field bus telegram.

12. The method as claimed in one of claims 1 to 11, **characterized in that** the stations (14-24) are individually assigned (48) the data fields in the outgoing data frame (46', 46") for filling with their own process and/or control data and the data fields in the returning data frame (46'") for reading extraneous process and/or control data.

13. The method as claimed in one of claims 1 to 12, **characterized in that** the stations (14-24) read the extraneous process and/or control data from the returning data frame (46'") and rearrange them to form a station-specific data word.

14. The method as claimed in one of claims 1 to 13, **characterized in that** the first station (14) generates every outgoing data frame (46) with a plurality of status fields, wherein every second station (16-22) is assigned at least one status field, and wherein every second station (16-22) changes its status field when the outgoing data frame (46) passes through.

15. A control system for transmitting process and control data of technical installations, configured for carrying out the method of claim 1, comprising a plurality of spatially distributed stations (14-24) which are connected to one another via a communication medium (26), where the stations (14-24) are logically arranged in a series which defines a first station (14), at least one second station (16-22) and a last station (24), and wherein at least one station comprises a control unit (12) for processing the process data and for generating control data and at least one station comprises an I/O unit for receiving input signals from sensors and for outputting control signals to actuators,
wherein the first station (14) has a first communication module (82) designed to generate a data frame (46) having a plurality of data fields (50), with every second station (16-22; 16-18) and the last station (24; 20) being clearly assigned at least one data field (50) for filling with its respective process and/or control data,
wherein the first communication module is further designed to send the data frame (46) as an outgoing data frame (46', 46") to that second station (16) which comes after the first station (14) in the series,
wherein every second station (16-22; 16-18) has a second communication module (82) designed to receive the outgoing data frame (46', 46") from the respective previous station in the series, to fill a data field (50) assigned to it with its respective process and/or control data and to send the outgoing data frame (46', 46") with the process and/or control data to the next station in the series, and
wherein the last station (24; 20) has a third communication module (82) designed to receive the outgoing data frame (46', 46") from the previous station in the series, to fill a data field assigned to it with last process and/or control data and to return the data frame with all the process and/or control data as a returning data frame (46') to the series of stations,
wherein the stations (14-24) are designed to read extraneous process and/or control data of the other stations from the data fields (50) of the returning data frame (46').

## Revendications

1. Procédé de transfert de données dans un système de commande (10) présentant plusieurs postes (14-24) répartis dans l'espace et reliés les uns aux autres par un support de communication (26),
les postes (14-24) étant disposés logiquement en une série qui définit un premier poste (14), au moins un deuxième poste (16-22) et un dernier poste (24),
les postes contenant au moins une unité de commande (12) configurée pour traiter cycliquement des données de traitement et former en fonction de celles-ci des données de commande, ainsi que plusieurs modules d'entrée-sortie (14-24) configurés pour envoyer des données de traitement à l'unité de commande (12) et pour recevoir des données de commande de l'unité de commande (12),
les étapes suivantes étant exécutées dans un cycle de transfert :
le premier poste (14) forme une trame (46) de données présentant plusieurs champs (50) de données, un ou plusieurs champs (50) de données destinés à être occupés par des données propres de traitement et/ou de commande étant attribués de manière claire à chaque deuxième poste (16-22; 16-18) et au dernier poste (24; 20),
le premier poste (14) envoie la trame (46) de données comme trame entrante (46', 46") de données au deuxième poste (16) qui suit le premier poste (14) dans la série,
chaque deuxième poste (16-22; 16-18) reçoit la trame (46') de données du poste précédent dans la série, occupe un champ (50) de données qui lui est attribué par des données propres de traitement et/ou de commande et envoie la trame (46') de données avec les données de traitement et/ou de commande au poste qui le suit dans la série et
le dernier poste (24; 20) reçoit la trame (46") du poste précédent dans la série, l'occupe par un champ (50) de données qui lui est attribué et contenant les dernières données de traitement et/ou de commande et renvoie dans la série de postes la trame de données avec toutes les données de traitement et/ou de commande comme trames (46'") de données de retour,
les postes (14-24) lisant des données étrangères de traitement et/ou de commande des autres postes dans les champs (50) de données de la trame (46'") de données.

2. Procédé selon la revendication 1, **caractérisé en ce que** le premier poste (14) forme cycliquement la trame (46) de données à des intervalles de temps (62) fixes et les envoie au deuxième poste (46) suivant.

3. Procédé selon les revendications 1 ou 2, **caractérisé en ce que** la trame (46) de données contient au moins un premier et un deuxième groupe de champs (50, 74) de données, les champs de données du premier groupe (50) étant attribués aux différents postes (14-24) de manière fixe sur toutes les trames (46) de données et les champs de données (74) du deuxième groupe de postes (14-24) étant attribués à la demande individuelle de chaque trame (46) de données.

4. Procédé selon l'une des revendications 1 à 3, **caractérisé en ce que** la trame (46"') de données traverse la série de postes (14-24) dans la succession inverse des trames.

5. Procédé selon l'une des revendications 1 à 4, **caractérisé en ce que** le premier poste (14) vérifie si la trame (46'") de données reste à l'intérieur d'une durée définie.

6. Procédé selon l'une des revendications 1 à 5, **caractérisé en ce que** le support de communication (26) est un parcours de transfert compatible avec Ethernet et **en ce que** la trame (46) de données est une trame de données compatible avec Ethernet.

7. Procédé selon l'une des revendications 1 à 6, **caractérisé en ce qu'**au moins chaque deuxième poste (16-22) envoie la trame (46) de données au poste suivant dans une opération dite "cut-through".

8. Procédé selon l'une des revendications 1 à 7, **caractérisé en ce que** chaque poste (14-24) envoie la trame (46) de données à un seul poste.

9. Procédé selon l'une des revendications 1 à 8, **caractérisé en ce que** le premier poste (14) forme plusieurs trames (46, 64) de données et les envoie en succession temporelle directe en tant que trames de données entrantes au deuxième poste (16) qui suit.

10. Procédé selon l'une des revendications 1 à 9, **caractérisé en ce que** différents champs (50a, 50b) de données sont occupés en alternance par au moins deux postes.

11. Procédé selon l'une des revendications 1 à 10, **caractérisé en ce que** différents postes (14-24) occupent au moins un champ (76) de données de la trame de données par des données de traitement et/ou de commande compatibles avec un télégramme de bus de terrain.

12. Procédé selon l'une des revendications 1 à 11, **caractérisé en ce que** les champs de données de la trame entrante (46', 46") de données sont attribués individuellement au postes (14-24) pour être occupés par des données de traitement et/ou de commande propres et les champs de données de la trame (46'") de données sont attribués à ces postes pour être lus par des données de traitement et/ou de commande.

13. Procédé selon l'une des revendications 1 à 12, **caractérisé en ce que** les postes (14-24) lisent les données de traitement et/ou de commande étrangères dans la trame (46'") de données et les trient pour former un mot de données spécifique au poste.

14. Procédé selon l'une des revendications 1 à 13, **caractérisé en ce que** le premier poste (14) forme chaque trame (46) de données avec plusieurs champs d'état, au moins un champ d'état étant attribué à chaque deuxième poste (16-22) et chaque deuxième poste (16-22; 16-18) modifiant son champ d'état lors du passage de la trame (46) de données.

15. Commande destinée à transférer des données de traitement et/ou de commande d'une installation technique, configurée pour mettre en oeuvre le procédé selon la revendication 1, présentant plusieurs postes (14-24) répartis dans l'espace et reliés les uns aux autres par un support de communication (26),
les postes (14-24) étant disposés logiquement en une série qui définit un premier poste (14), au moins un deuxième poste (16-22) et un dernier poste (24),
au moins un poste contenant une unité de commande (12) configurée pour traiter cycliquement des données de traitement et former des données de commande et au moins un poste contenant un module d'entrée/sortie qui reçoit des signaux d'entrée de capteurs et qui délivre des signaux de commande à des actionneurs,
le premier poste (14) possédant un premier module de communication (82) configuré pour former une trame (46) de données présentant plusieurs champs (50) de données, un ou plusieurs champs (50) de données destinés à être occupés par des données propres de traitement et/ou de commande étant attribués de manière claire à chaque deuxième poste (16-22; 16-18) et au dernier poste (24; 20),
le premier module de communication étant en outre configuré pour envoyer la trame (46) de données comme trame entrante (46', 46") de données au deuxième poste (16) qui suit le premier poste (14) dans la série,
chaque deuxième poste (16-22; 16-18) possédant un deuxième module de communication (82) configuré pour recevoir la trame (46') de données du poste précédent dans la série, occuper un champ (50) de données qui lui est attribué par des données propres de traitement et/ou de commande et envoyer la trame (46') de données avec les données de traitement et/ou de commande au poste qui le suit dans la série et
le dernier poste (24; 20) possédant un troisième module de communication (82) configuré pour recevoir la trame (46") du poste précédent dans la série, l'occuper par un champ (50) de données qui lui est attribué et contenant les dernières données de traitement et/ou de commande et renvoyer dans la série de postes la trame de données avec toutes les données de traitement et/ou de commande comme trames (46'") de données de retour,
les postes (14-24) étant configurés pour lire des données étrangères de traitement et/ou de commande des autres postes dans les champs (50) de données de la trame (46'") de données de retour.
